# EUROPEAN PATENT APPLICATION

(11) **EP 1 561 658 A2**
(43) Date of publication of application: **10.08.2005**
(21) Application number: 05002329.0
(22) Date of filing: 04.02.2005
(51) Int. Cl.: B60S 3/04

(54) **A washing assembly for motor vehicle wheels**

(30) Priority: 06.02.2004 IT MI20040194
(71) Applicant: FAVAGROSSA EDOARDO S.r.l., 26040 Roncadello di Casalmaggiore (Cremona) (IT)
(72) Inventor: Favagrossa, Francesco Favagrossa Edoardo S.r.l., 26040 Roncadello di Casalmaggiore (IT)
(74) Representative: Cicogna, Franco

(57) **Abstract**

The present invention relates to a washing assembly for motor vehicle wheels and the like, comprising a disc brush element (2) coupled to driving means (5) designed for causing said brush element (2) to perform a rotary movement in a circular orbit and a further rotary movement about an axis (2a) of the brush element (2).

## Description

### BACKGROUND OF THE INVENTION

The present invention relates to a washing assembly for motor vehicle wheels and the like.

As is known, in several industrial fields and, in particular, in motor vehicle washing systems, it is necessary to use small diameter brush elements for performing washing operations on broad surfaces.

Considering, by way of an example, the case of washing assemblies for washing motor vehicle wheels and the like, in motor vehicle washing systems, to fit the different size of the motor vehicle wheels, it is necessary to use a rotary brush having a size corresponding to the maximum diameter of the wheel to be washed or cleaned.

As it should be apparent, such an approach would involve a lot of problems, the first of which is that it is necessary to rotatively drive comparatively large masses, even if this would not be strictly required.

Moreover, the washing efficiency is reduced, since a large size brush cannot be easily introduced into the different small spaces or gaps of the wheel to be washed, with a self-evident disadvantage with respect to the quality of the washing operation.

### SUMMARY OF THE INVENTION

Accordingly, the aim of the present invention is to overcome the above mentioned problem, by providing a washing assembly, specifically designed for motor vehicle wheels and the like, allowing to perform the washing operation on a broad surface of the wheels, while using small diameter brush elements.

Within the scope of the above mentioned aim, a main object of the present invention is to provide such a washing assembly allowing to perform a very efficient washing operation, owing to the combination of two distinct movements for the brush, thereby providing a greater washing efficacy.

Yet another object of the present invention is to provide such a washing assembly which, due to its specifically designed constructional features, is very reliable and safe in operation.

Yet another object of the present invention is to provide such a washing assembly which allows, while using a small size brush, to be made with a very small making cost.

According to one aspect of the present invention, the above mentioned aim and objects, as well as yet other objects, which will become more apparent hereinafter, are achieved by a washing assembly specifically designed for motor vehicle wheels and the like, characterized in that said washing assembly comprises a disc brush coupled to drive means adapted to drive said brush with a first rotary movement in a circular orbit and a second rotary movement about the axis of the brush.

### BRIEF DESCRIPTION OF THE DRAWINGS

Further characteristics and advantages of the present invention will become more apparent hereinafter from the following detailed disclosure of two preferred embodiments of a washing assembly for motor vehicle wheels and the like, and as illustrated, by way of an indicative, but not limitative, example in the accompanying drawings, where:

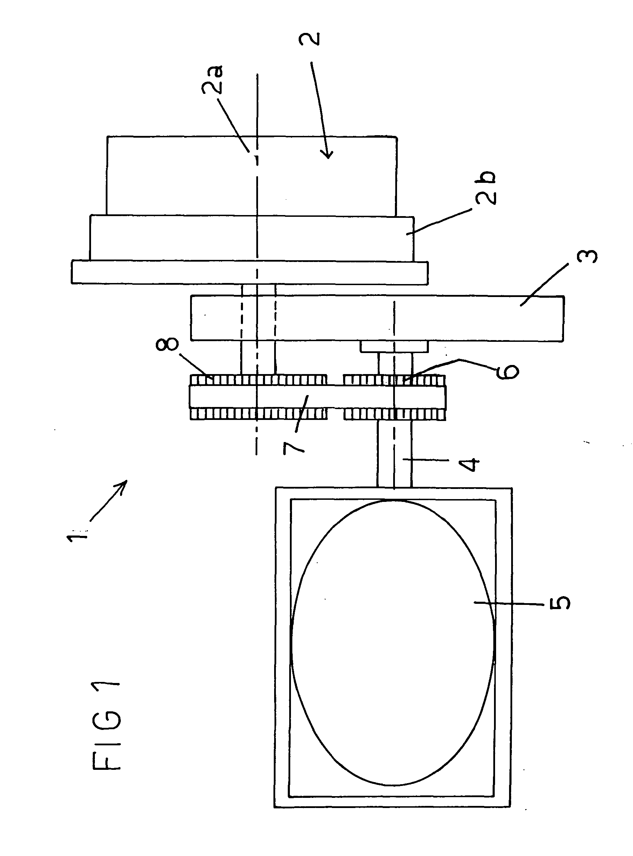

Figure 1 is a schematic side view illustrating the washing assembly according to the present invention;

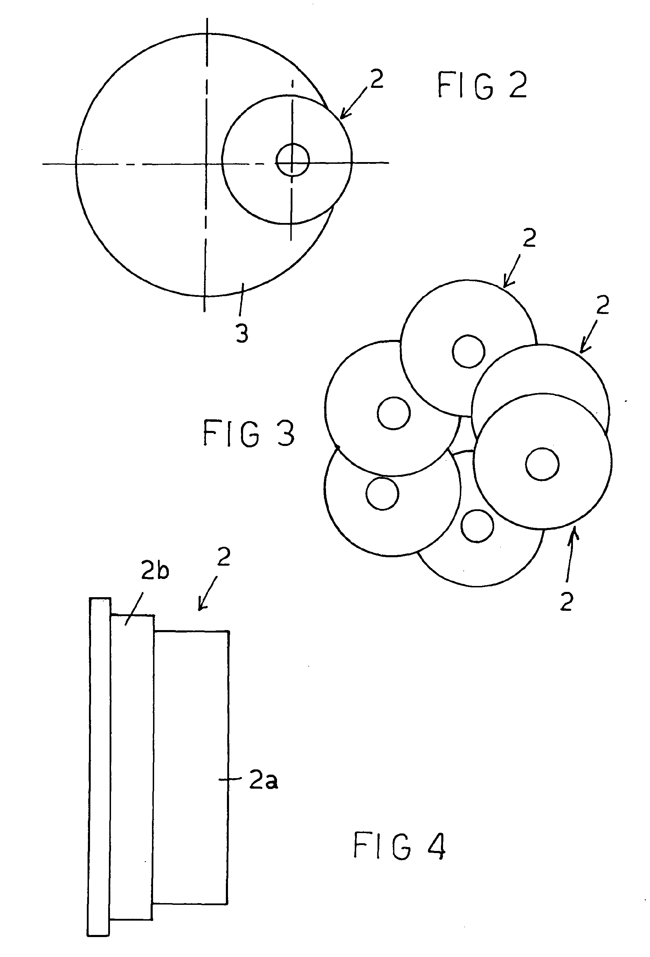

Figure 2 is a front view of the washing assembly, and clearly showing the location of the disc brush with respect to the washing orbit;
Figure 3 shows the subsequent orbital positions assumed by the washing brush;
Figure 4 is a side elevation view illustrating the washing brush;
Figure 5 is a schematic view showing the washing assembly with a first orbital movement and a further rotary movement about the brush axis, as applied to a motor vehicle;
Figure 6 is a schematic view illustrating a modified embodiment of the invention, in which the washing brush is exclusively subjected to an orbital movement.

### DESCRIPTION OF THE PREFERRED EMBODIMENTS

With reference to the number references of the above mentioned figures, the washing assembly, specifically designed for washing motor vehicle wheels and the like, according to the present invention, which has been generally indicated by the reference number 1, comprises a disc brush 2 which, advantageously, is provided with a central brush portion 2a having longer bristles, which is encompassed by a circumferential brush portion 2b having shorter bristles.

The brush 2, as shown, is eccentrically supported by a supporting disc 3 which is coupled about a transmission shaft 4 which is coaxial to the disc.

On the shaft 4, which is coupled to a motor 5, is provided an active gear element 6 which, through a belt 7, drives a passive gear element 8 which is coaxial to the brush 2.

With the above arrangement, means are provided adapted to apply to the brush 2 both a rotary movement in a circular orbit and a further rotary movement about the axis or axle of the brush.

With the disclosed arrangement, it is accordingly possible to greatly broaden the area affected by the disc brush, thereby allowing to provide a perfect washing operation through a region which is greatly larger of the brush size.

Moreover, the combination of the two disclosed movements, i.e. of the circular orbital movement and the rotary movement on itself of the brush, provides a very good washing efficiency, since the brush can arrive at regions which could not be on the contrary easily reached with conventional rotary brushes coaxially turning about the motor vehicle wheel.

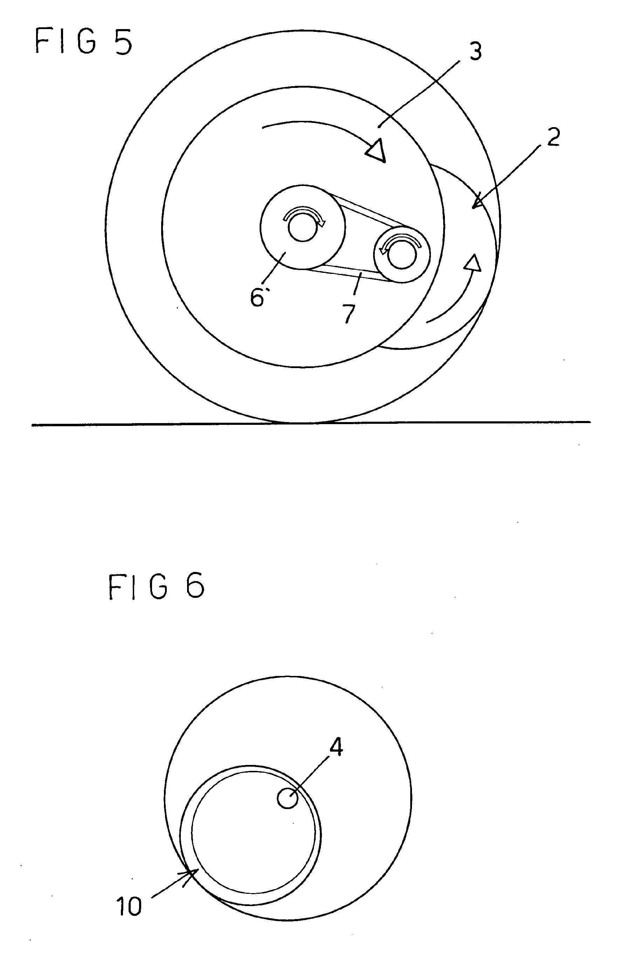

In order to simplify the construction, as is schematically shown in figure 6, it is also possible to provide a brush, generally indicated by the reference number 10, which is eccentrically associated with a drive shaft, indicated by 4, adapted to subject the brush to exclusively an orbital rotary movement.

More specifically, the brush, which is eccentrically fixed to the drive shaft 4, which is axially offset, will perform a larger orbit than its diameter, thereby allowing the possibility of washing large wheels with disc brush having a much more smaller diameter, at the limit, having a diameter corresponding to a half of the diameter of the region being washed.

From the above disclosure it should be apparent that the invention fully achieves the intended aim and objects.

In fact, the invention provides a washing assembly in which is it possible to use a reduced size brush while allowing to perform a very efficient washing operation through the overall wheel.

Moreover, the washing operation can be performed both in an active and in a passive manner, since it is possible to cause the brush to turn about its axis, in combination with an orbital rotary movement, or, optionally, with only an orbital action.

The invention, as disclosed, is susceptible to several modifications and variations, all coming within the scope of the invention.

Moreover, all of the constructional details can be replaced by other technically equivalent elements.

In practicing the invention, the used materials, as well as the contingent size and shapes can be any, depending on requirements.

## Claims

1. A washing assembly, specifically for motor vehicle wheels and the like, **characterized in that** said washing assembly comprises a disc brush, coupled to drive means adapted to drive said brush with a first rotary movement in a circular orbit and a second rotary movement about the brush axis.

2. A washing assembly, particularly for motor vehicle wheels and the like, **characterized in that** said washing assembly comprises a disc brush, coupled to drive means adapted to drive said brush with a rotary movement in a circular orbit.

3. A washing assembly, according to the preceding claims, **characterized in that** said brush is eccentrically supported by a disc which is rotatable about its axis.

4. A washing assembly, according to one or more of the preceding claims, **characterized in that** said disc is coupled to a motor assembly, through a transmission shaft which is axially arranged with respect to said disc.

5. A washing assembly, according to one or more of the preceding claims, **characterized in that** said washing assembly comprises drive means adapted to drive the rotary brush about its axis.

6. A washing assembly, according to one or more of the preceding claims, **characterized in that** said drive means comprise an active gear element, coupled to a transmission shaft and connected, through a connecting belt, to a further passive gear element keyed on the rotary axis of said disc brush.

7. A washing assembly, according to one or more of the preceding claims, **characterized in that** said disc brush comprises long bristles at a middle portion thereof peripherally encompassed by short bristles.

8. A washing assembly particularly for motor vehicle wheels and the like, according to the preceding claims, and substantially as broadly disclosed and illustrated and for the intended aim and objects.
